# EUROPEAN PATENT SPECIFICATION

(11) **EP 1 520 379 B1**
(45) Date of publication and mention of the grant of the patent: **07.04.2010**
(21) Application number: 02807580.2
(22) Date of filing: 04.07.2002
(51) Int. Cl.: H04L 12/58

(54) **METHOD AND ARRANGEMENT FOR PROVIDING A MESSAGING SERVICE**
VERFAHREN UND ANORDNUNG ZUR BEREITSTELLUNG EINES NACHRICHTENÜBERMITTLUNGSDIENSTES
PROCEDE ET DISPOSITIF DE REALISATION D'UN SERVICE DE MESSAGERIE

(43) Date of publication of application: 06.04.2005
(73) Proprietor: TELEFONAKTIEBOLAGET LM ERICSSON (publ), 164 83 Stockholm (SE)
(72) Inventor: NICODEM, Eelco, NL-3335 BK Zwijndrecht (NL)
(74) Representative: Pfeifer, Torsten
(86) International application number: PCT/EP2002/007540
(87) International publication number: WO 2004/006519

(56) References cited:
- WO-A-01/69387
- US-A- 5 493 692
- US-A- 5 812 865

## Description

### Field of the Invention

The present invention relates to a method of delivering a message using at least one telecommunications network, said message comprising message content, wherein a user has access to a plurality of telecommunications services, such as digital cable television services, telematic services, Plain Old Telephone Services (POTS) or Internet-Protocol-based (IP) services, which telecommunications services are provided to the user via said at least one network and are accessed by the user using one or more user access devices, such as a UMTS phone or a TV set-top box, comprising a step of selecting a target access device from said user access devices based on results of a use-analysis of any of said telecommunications services and said user access devices.

The present invention further relates to an arrangement for delivering a message comprising message content via at least one telecommunications network, comprising means for providing access to a plurality of services via said at least one network and via one or more access devices, further comprising means for selecting a target access device from said user access devices based on results of a use-analysis of any of said telecommunications services and said user access devices.

### Background of the Invention

Such a method and arrangement are for example disclosed in International patent application nr. WO 01/69387, wherein a notification platform sends notifications to a user of said platform based on a context analysis for determining a user's state such as location and attentional focus of the user. The user's state is employed by a notification manager which determines what, when and how information generated by notification sources is forwarded to notification sinks.

In modern telecommunications most users are subscribed to a number of different telecommunication services, enabling these users to use modern communication techniques wherever they are and whenever they desire.

A user may have plain old telephone services (POTS) and/or a TV set-top box at home, a mobile telephone such as universal mobile telecommunication system (UMTS) or global system for mobile communications (GSM) and a personal computer (PC) connected to the internet. More sophisticated users additionally have fax machines, pagers, personal digital assistants (PDA, or handheld), (telematics) alarm systems or laptops.

The above-mentioned access devices, which are just a few out of a long list of other possible access devices, can be used to access an even longer list of different services, such as internet access (web surfing, internet TV), electronic mail (e-mail), fax services, voice services, voice mail services (VMS), short message service (SMS), data services, telematics services and many more.

The abovementioned services may all be actively used by the user. In an even broader view, an enormous source of telecommunications services and services that make use of telecommunications services are used on a day-to-day basis without the user being aware of it, even unintentional. A user may withdraw money via an automatic teller machine (ATM), or pay his/her groceries with a credit card or bank card. By performing the transaction, use is made of telecommunications services. A user may also use an identification card to access an office building, upon which the security system records his presence in the building. These security systems may be connected to a security network, using telecommunications services.

To offer all these services, telecommunications operators separate their networks into logical networks that may use the same physical connections, but are transparent to each other. Examples are voice, data and IP-based platforms. Each service uses its own protocol, which can be understood and translated into commands by access devices through which the service can be accessed.

Originally, telecommunications services were provided via networks that were specifically designed for these services. The first voice services were provided to the user via physical land lines. Growing demand for telecommunications services lead to the development of all kinds of multiplexing techniques, the introduction of fibre optics and the use of personal wireless communications. Also other type of networks have been used, like power networks and cable television networks, because of their long history of use and thus the fact that these networks have been fully integrated in society. As a result of all these developments most members of society make constant use of services that are or may be provided via networks, e.g. using power, watching cable or internet TV, making phone calls, withdrawing money from a bank account via an ATM, using a bank card or a credit card in a shop, internet access, using access cards to access buildings, the use of security networks, the use of chips and/or transmitter means in cars for security and registration purposes, the use of identification in public transportation, etc.

Modern telecommunications services have made many things a lot easier and have boosted the economy in the past decennia, but they have also introduced new problems. Most of the telecommunications services are for instance bound to certain hardware. As an example, historically voice services were bound to landline phones and after the introduction of personal wireless communications these services were bound to both landline phones and mobile phones. The integration of services and hardware is an ongoing long-term development.

Reachability of users forms another new problem of modern communications. The many services used by a user make him/her difficult to reach, as he/she needs many access devices to check regularly.

The above drawbacks are illustrated below by looking closer at messaging services in particular. Messaging services, such as e-mail or SMS, are a very popular means of communication. In most cases, however, these are stand-alone services, meaning that messages sent in one protocol or service can not be received in another protocol or service. Various systems have become available that overcome this drawback, providing a means to trigger a message in one service by sending a message in another service. For instance, some operators use voice mail systems that, upon receiving of a voice mail, send an SMS to a user's mobile phone, so that the user is notified. However, notifications as such do not provide the content of the original message such that, after receipt of a notification, a user has to initiate further action to become aware of the content of the original message.

Another drawback follows directly from the reachability of the telecommunications user. As the user has many access devices to control, he/she has to check every access device regularly to see whether he has new messages. The major benefit mentioned above, the fact that users can communicate wherever they are and whenever they desire, introduces the problem that the better reachable the user is, the less likely it is that a message sent to this user is read instantaneously by this user.

Existing messaging services, and systems, do not provide means to overcome this problem. Arrangements like the voice mail system sending SMS messages, as mentioned in the example above, partly overcome this problem, but on the other hand are limited to a single access device upon which this SMS message is received.

More sophisticated systems might collect messages and triggers sent to other access devices, and notify a user on a single access device. For instance, taking again the example of voice mail, a system might collect all voice mails sent to all access devices of a user, and make these voice mails available on a voice mail system connected to the user's mobile phone. Any combination of the solutions presented above is of course also possible. However, the limitation to a single access device is an issue that still remains. A user of the above system, might not receive any messages in case the battery of this single access device is empty.

### Summary of the Invention

It is an object of the present invention to provide a method of and an arrangement for providing telecommunications services, offering extended reachability to the users of these services.

It is an additional object of the present invention to provide a method and an arrangement that is simple and easy to implement, thus reducing cost of production and providing extended compatibility.

These and other objects and advantages of the present invention are provided by a method and arrangement as described in the independent claims of the application. Specific embodiments of the invention are described in the dependent claims.

With the convergence of networks, the opportunity exists to deploy telecommunications services independent of the subscriber's access device and independent of the originating- and destination network the device is connected to. Such functionality can be enabled by a method for providing telecommunications services which is deployed in between telecom's networks, and which is flexible enough to handle all sorts of incoming events and re-trigger them on any device the subscriber uses frequently and is switched on. Examples of such events can be voice or data calls, message-related signalling events, the receiving of e-mail, etcetera.

In an embodiment of the present invention, the handling and re-triggering is done based on result of performing use-analysis of any of the services and the access devices. This use analysis may, for example, provide an indication of a user's whereabouts. This indication may be made available by performing an analysis of use of any one or more access device a user may have, which access device is connected to any type of telecommunications network. One could think of cable TV networks, security networks, networks used for financial services, power networks, voice networks, data networks, internet, wireless networks, etcetera.

In a preferred embodiment of the present invention operation of a service invokes at least one service-related event, as mentioned above, and the at least one service-related event is used as an input to the use-analysis of any of services and access devices available to a user.

Events as indicated above may comprise information regarding a user's whereabouts, actions, habits, and other information that may be valuable in a use-analysis of services and access devices that are available to a user.

A method corresponding to the present invention bridges between different originating service types and destination service types, effectively enabling triggering and conversion of messaging services specific to one service type based on incoming events that occurred in another service type after results of a performed use-analysis of any of the services and the access devices, such as the indication of a user's whereabouts, have become available.

A preferred embodiment of the present invention a step of detecting which of the access devices is used regularly comprises detecting an operational mode of each access device, such as whether the access device is switched on or maybe an access device is blocked for receiving messages of a certain type. The operational capabilities of an access device, providing information about which type of service an access device can receive, or the preferences of the user can also be taken into account. A user might for instance prefer to receive messages only on a certain access device at certain times of the day, for example his mobile phone between 8.00 and 8.30 a.m. when he/she is on the road. A message will then be sent to the selected access device.

According to the invention, a message is composed by a server in a format which is dependent on the type of access device to which the message will be sent. In a certain embodiment this format can be decided upon by the server in case an access device is capable of handling messages in more than one format, for instance a PDA or UMTS phone.

The message composed in the above embodiment may comprise a part of the data which was stored in an event received by the server. This data might be converted before it is included in the message.

The above-mentioned and other features and advantages of the invention are illustrated in the following description of the preferred embodiment of the present invention, with reference to the enclosed drawings. The present invention described hereinafter, will be likewise applicable to any telecommunications system comprising means for providing a plurality of messaging services. Systems arranged for deploying above-mentioned method are regarded as an embodiment of the present invention.

### Brief Description of the Drawings

Figure 1 shows in a very schematic form a modern telecommunications environment.
Figure 2 schematically shows an embodiment of the present invention.
Figure 3 shows a process flow diagram of an embodiment of the method according to the present invention.
Figure 4 shows another embodiment of the present invention.

### Detailed Description of the Embodiment

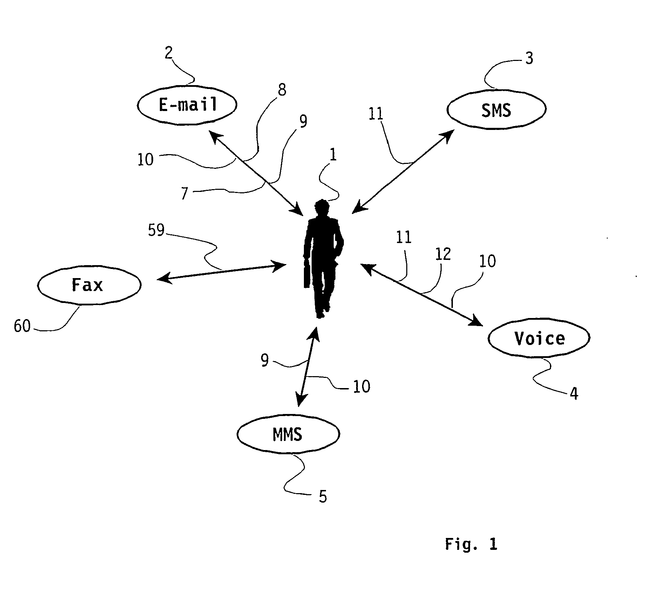

In figure 1 a user 1 is offered a plurality of telecommunication services 2, 3, 4, 5 and 60. The user 1 can access these services using a plurality of access devices 7, 8, 9, 10, 11, 12 and 59.

The user 1 has the choice of subscribing to services like e-mail 2, short messaging service (SMS) 3, voice services 4, multimedia messaging system (MMS) services 5 and fax services 60. E-mail services 2 can be accessed by the user 1 via a television (TV) set-top box 7, a personal computer (PC) 8, a universal mobile telecommunication system (UMTS) personal digital assistant (PDA, or so-called handheld) 9, or a UMTS phone 10. SMS can be accessed by the user 1 using his global system for mobile telecommunications (GSM) mobile phone 11. Voice services 4 can be accessed by user 1 using a UMTS phone 10, a GSM mobile phone 11, or a plain old telephone services (POTS) regular landline phone 12. MMS services 5 can be accessed by user 1 using a UMTS PDA 9 or UMTS phone 10. Fax services 60 can be accessed by user 1 using a fax machine 59.

Of course other types of messaging services exist, which can be accessed using same or other type of access devices, but are left out of the drawing for clarity reasons. The present invention may relate to any other telecommunications service. The readers attention is particularly drawn to modern IP, voice and data-based services, but it will be appreciated by those skilled in the art that the principle disclosed here applies to any service wherein a indications are received or provided to a user via a network. In addition to the examples described above the present invention may be used in combination with services related to or based on transmitted TV or radio signals, satellite communications, signalling via electricity networks, railways, road and traffic signalling, or similar means of communications. The invention is, of course, not limited to such services.

Figure 1 clearly shows how difficult it can be to reach user 1 in case of an emergency. The party who wants to get a message across, has the choice out of five different ways of reaching the user via six possible access devices. This might cost the other party quite a lot of time and in the worst case the other party only has part of the numbers and addresses of user 1 required to reach him/her.

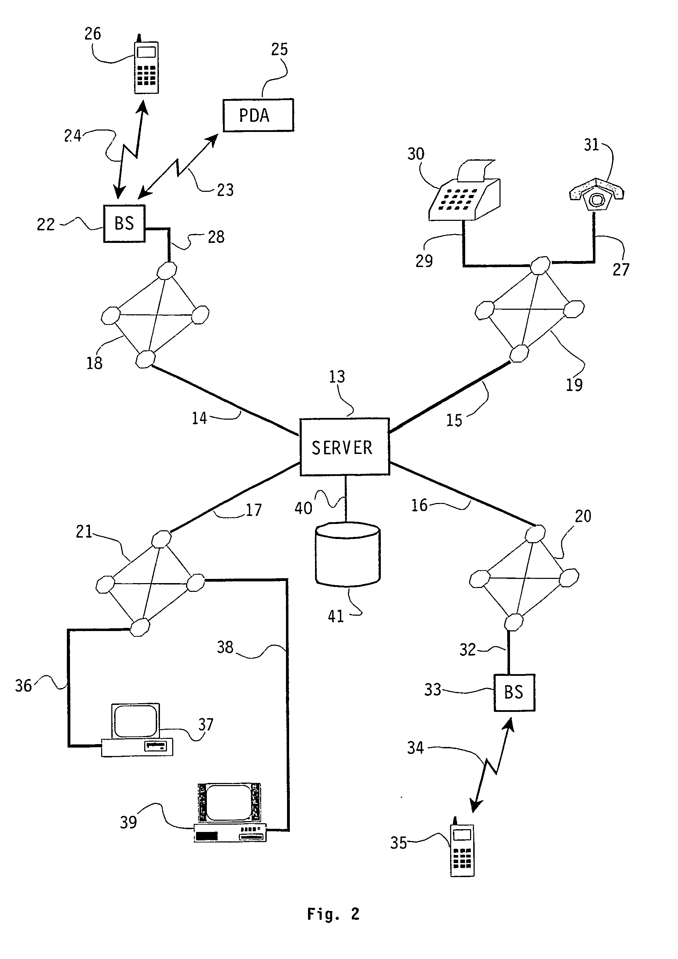

Figure 2 shows an embodiment of the present invention, wherein a server 13 is connected to a number of telecommunication's networks 18, 19, 20 and 21, via connections 14, 15, 16 and 17. Telecommunications network 18 is a UMTS-network, for example, to which base stations 22 connect providing wireless links 23, 24 to access devices such as a PDA 25 or a UMTS-phone 26. Network 19 is, for example, a POTS-network, to which landline telephones 31 or fax machines 30 are connected via wireline connections 27 and 29. Telecommunications network 20 is, for example, a GSM network to which base stations 33 connect via links 32, which base stations 33 provide wireless connections 34 to GSM mobile phones 35. Telecommunications network 21 is an IP-based network, like internet, to which a personal computer 37 may be connected via wireline connection 36. A TV set-top box 39 may be connected via connection 38 to the IP-based network 21 as well.

Server 13 is also connected to a repository or database 41 via connection 40. This database comprises information on historic use of access devices, for example 25, 26, 30, 31, 35, 37, 39. Based on actually measured and/or statistical data, this information on historic use may include the frequency of use of access devices within a given time frame, the order of use of access devices, which device is used first, second, etc., the access device that is used last, the operational mode of access devices, for example, is a device switched on or off, or is it in silent mode, the frequency of use of access devices in combination with the nature of received messages, for example, based on historic use it may be evident that a user prefers to receive text messages in SMS format, as opposed to e-mail format, geographical history of a device, where has the device been in a given time frame. It will be appreciated that within the tracking, recording, storage or use of the information on historic use, this information is not limited by the examples presented above.

Database 41 may further comprise information which is unrelated to the history of use of access devices like, for example, 25, 26, 30, 31, 35, 37, 39. For example, the information that is kept for history tracking, as described above, may be made available for a present moment, so non-historic e.g. the current geographical location of a device, or the current operational mode. Other examples of information which is unrelated to the history of use are user preferences, operational capabilities, which formats can be handled by a device, like for example whether it is a multimedia device capable of handling internet TV or a plain voice based telephone, physical or other characteristics of the device, like the dimensions of the user interface or the mobility of a device, e.g. size of the screen of a mobile or whether a device is wireless or not, or similar information that is unrelated to the history.

The information stored in database 41 as mentioned above may, in a preferred embodiment, be available in the form of a destination device decision matrix (not shown), that indicates which device should be selected given absence or presence of certain message content. This destination device decision matrix may be a table comprising a presentation of at least part of the abovementioned historic use data and non-historic data. This data may be presented in a summarized format.

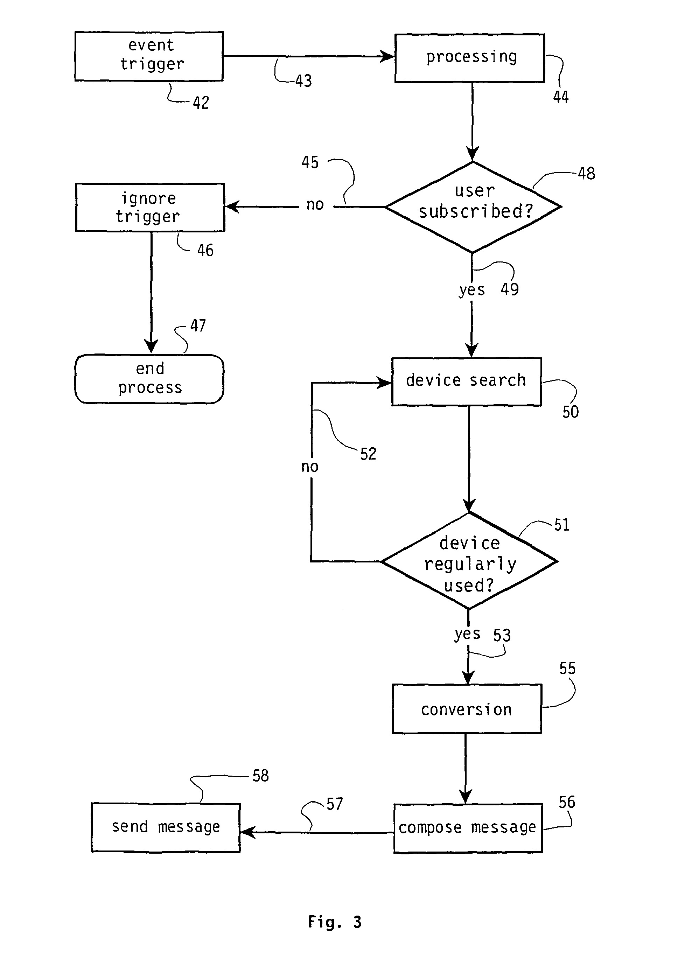

In this preferred embodiment, the method according to the present invention is carried out by server 13. In this embodiment a method as shown in figure 3 is used. This method will be illustrated by an example. Suppose a user 1 has left home to go to work, taking his UMTS mobile phone 26 with him, and someone (not shown) sends user 1 an urgent message containing pictures or a digital movie on his set-top box 39 via e-mail.

Service-related event 42, related to an incoming e-mail message containing multimedia attachments on TV set-top box 39, is received 43 by server 13. Server 13 processes 44 this event. The processing 44 could comprise functions as event decoding and analysis, event categorisation, event prioritisation, or any other processing function. Server 13 first briefly checks whether the user is subscribed 48 to the messaging service provided by the embodiment of the present invention. In case the user 1 is not subscribed 45, the event is ignored 46 and the process is ended 47, the server 13 waits for a new event (not shown).

In case the user is subscribed 49, server 13 starts a device search 50. During the device search 50, the server 13 looks up information regarding the access devices of the user 1 in a data base 41. This database 41 comprises information regarding the available access devices of the user 1, the operational capabilities of the access devices, subscriber preferences per device, or likewise. In this particular example, server 13 will attempt to identify an access device that is capable of handling e-mail with multimedia attachments. The server 13 may conclude that, besides the set-top box 39, a PC 37, a UMTS phone 26 and a UMTS PDA 25 are available to user 1 and meet the requirements. After this step 50, the server 13 will check 51 from historic use data whether the devices selected in step 50 are used regularly or are currently switched on, for example. The server 13 may conclude that the set-top box has not been used over the past 12 hours, the PDA 25 has been used an hour ago but is currently switched off and the UMTS phone 26 has been used twice in the last 15 minutes and is switched on. The output of this step is a destination device decision matrix, that indicates which device should be selected given absence or presence of certain message content (not shown).

A method of selecting an access device, according to an embodiment of the present invention, may proceed as follows based on a destination device decision matrix determined as described above. In case a device is not used regularly 52, as for the set-top box 39, for example, server 13 proceeds with step 50. In case a device is regularly used 53, as for the UMTS phone 26, for example, server 13 starts converting 55, if necessary, data from or about the event trigger 42 to an appropriate format that can be used in a message 58 that will be sent to the targeted access device. In the example this access device is UMTS phone 26 and the message format might be multimedia messaging system (MMS) format. After conversion of the data 55, server 13 may compose a message 56 and send 57, 58 the message to the appropriate access device, in this case as mentioned UMTS phone 26.

The user 1 will receive an MMS message on his UMTS phone 26, for instance comprising the contents of the original e-mail message including attachments. The message may further comprise additional information like an indication of the access device that originally received the message.

Instead of selecting and sending a message to an access device of a user based on whether the device is used regularly by the user, other selection criteria such as, but not limited to, an operational mode, operational capabilities of an access device and/or user preferences.

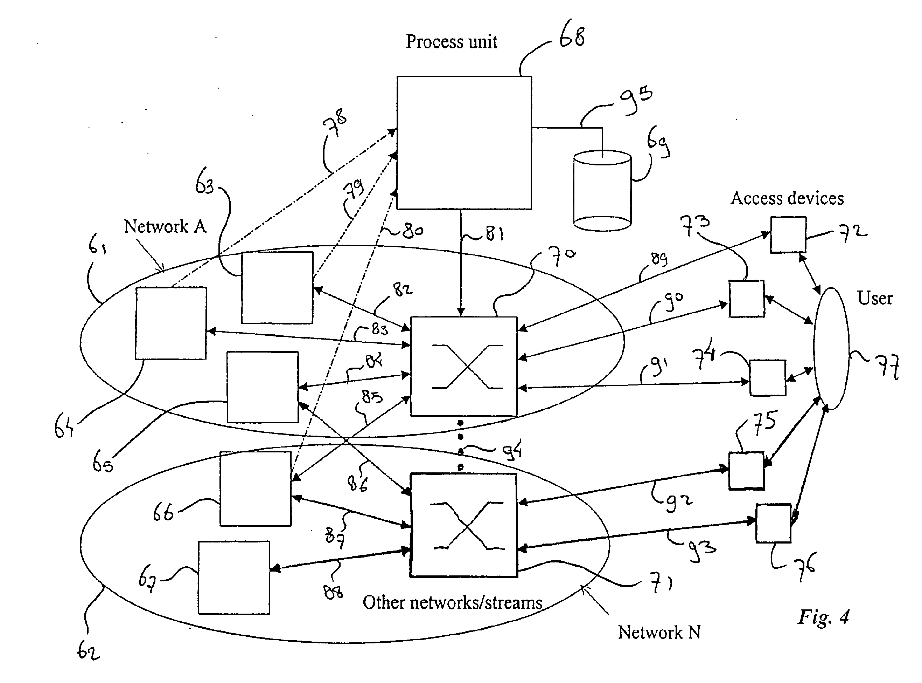

Figure 4 shows another embodiment of the invention. Here, out of a plurality of telecommunications networks, network A 61 and network N 62 are shown, comprising a plurality of service provisioning systems 63, 64, 65, 66, 67 which are connected to routing switches 70 and 71, via connections 82, 83, 84, 85, 86, 87 and 88. A user 77 may be connected to the networks 61 and 62 via access devices 72, 73, 74, 75 and 76, which are connected to routers 70 and 71 via connections 89, 90, 91, 92 and 93. Routers 70 and 71 may be interconnected via a connection 94. As will be appreciated by those skilled in art, routers 70 and 71, as well as the access devices 72-76 and services 63-67) may be connected to any other routers, services and access devices in networks that are not shown in figure 4, but may have a similar layout.

A processing unit 68 is connected to the service provisioning systems 63-67 via connections such as 78, 79 and 80. In the configuration shown in figure 4, these connections carry one-way traffic from the service provisioning systems 63-67 to the processing unit 68. This one-way traffic may be comprised of service related events, generated by the service provisioning systems 63-67. The events may contain information about how the service will be delivered, such as on which access device 72-76. The processing unit 68 may record this information and store same in a database 69, which is connected to the processing unit 68 via connection 95. The processing unit may perform use-analysis of services received and used by user 77 or use-analysis of access devices 72-76. The results of such an analysis may be sent to routing switches 70 and 71 via connection 81, which connects the processing unit 68 to the routing switches 70 and 71. This information may be used to drive the routing switches 70 and 71, such that services are delivered to the user on an access device that is most likely available for use by user 77, for example, his mobile when he/she is on the road or his set-top box when he/she is watching TV.

Another embodiment of the invention, which is not shown in the figures, is the use of virtual entities that 'follow' a user in a telecommunications network. Such virtual entities may record all kinds of information regarding a user's whereabouts, habits, access devices, wishes, limitations, preferences, etc. One can think of entities that are managed by processing units, such as 68 in figure 4 or 13 in figure 2. Such entities can be applied in the management of telecommunications services, for example.

It will be appreciated that numerous modifications and variations of the present invention are possible in the light of the above teachings. It is therefore understood that within the scope of the attached claims, the invention may be practised otherwise than as specifically described herein.

## Claims

1. Method of delivering a message using at least one telecommunications network (18, 19, 20, 21), said message comprising message content, wherein a user (1) has access to a plurality of telecommunications services (2, 3, 4, 5, 60), such as digital cable television services, telematic services, Plain Old Telephone Services (POTS) or Internet-Protocol-based (IP) services, which telecommunications services (2, 3, 4, 5, 60) are provided to the user (1) via said at least one network (18, 19, 20, 21) and are accessed by the user (1) using one or more user access devices (7, 8, 9, 10, 11, 12, 59), such as a UMTS phone or a TV set-top box, comprising a step of selecting a target access device (26) from said user access devices (7, 8, 9, 10, 11, 12, 59) based on results of a use-analysis of any of said telecommunications services (2, 3, 4, 5, 60) and said user access devices (7, 8, 9, 10, 11, 12, 59), **characterized in that**, said selecting of a target access device (26) is further based on an analysis of operational capabilities of said user access devices (7, 8, 9, 10, 11, 12, 59) in dependence of said message content, wherein said message is delivered at said selected target access device (26) by converting (55) at least a part of said message content to a format which is dependent on said selected target access device (26).

2. Method according to claim 1, wherein operation of at least one of said telecommunications services (2, 3, 4, 5, 60) invokes at least one service-related event (42), and wherein said at least one service-related event (42) is used as an input to said use-analysis of any of said telecommunications services (2, 3, 4, 5, 60) and said user access devices (7, 8, 9, 10, 11, 12, 59).

3. Method according to any of the previous claims, wherein a personal identification by said user (1), such as a personal identification for use of banking services or public transportation, is used as an input to said use-analysis of any of said telecommunications services (2, 3, 4, 5, 60) and said user access devices (7, 8, 9, 10, 11, 12, 59).

4. Method according to any of the previous claims, further comprising a step of keeping a history of results of said use-analysis of any of said telecommunications services (2, 3, 4, 5, 60) and said user access devices (7, 8, 9, 10, 11, 12, 59), and wherein delivery of said message is based on said history.

5. Method according to any of the previous claims, wherein said step of selecting a target access device (26) is further dependent on an operational mode of any of said user access devices (7, 8, 9, 10, 11, 12, 59).

6. Method according to any of the previous claims, wherein delivering of said message further depends on preferences of the user (1) for receiving any of said plurality of services.

7. Method according to any of the previous claims, wherein delivering of said message comprises a step of triggering off a further message to said target access device (26).

8. Arrangement for delivering a message comprising message content via at least one telecommunications network (18, 19, 20, 21), comprising means for providing access to a plurality of services via said at least one network (18, 19, 20, 21) and via one or more access devices, further comprising means for selecting a target access device (26) from said user access devices (7, 8, 9, 10, 11, 12, 59) based on results of a use-analysis of any of said telecommunications services (2, 3, 4, 5, 60) and said user access devices (7, 8, 9, 10, 11, 12, 59), **characterised in that**, said means for selecting a target access device (26) are further arranged for selecting said target access device (26) based on an analysis of operational capabilities of said user access devices (7, 8, 9, 10, 11, 12, 59) in dependence of said message content, and said arrangement further comprises means for delivering said message at said selected target access device (26) by converting (55) at least a part of said message content to a format which is dependent on said selected target access device (26).

9. Arrangement according to claim 8, further comprising means for receiving service related events (42), means for interpreting these service related events (42), and means for using said events (42) as an input to said use-analysis of any of said telecommunications services (2, 3, 4, 5, 60) and said user access devices (7, 8, 9, 10, 11, 12, 59).

10. Arrangement according to any of the claims 8 and 9, further comprising a database of historic data regarding results of said use-analysis of any of said telecommunications services (2, 3, 4, 5, 60) and said user access devices (7, 8, 9, 10, 11, 12, 59), and means for storing information regarding said results in said database.

11. Arrangement according to any of the claims 8-10, wherein said means for selecting said target access device (26) is further arranged for selecting said target access device (26) based on an operational mode of any of said user access devices (7, 8, 9, 10, 11, 12, 59).

12. Arrangement according to any of the claims 8-11, wherein said means for selecting said target access device (26) is further arranged for selecting said target access device (26) based on user preferences.

13. Arrangement according to any of the claims 8-12, wherein said means for delivering said message is arranged for triggering off a message to said selected target access device (26).

14. Arrangement according to any of the claims 8-13, further comprising means for providing an indication of a user's (1) whereabouts based on result of said use-analysis of any of said telecommunications services (2, 3, 4, 5, 60) and said user access devices (7, 8, 9, 10, 11, 12, 59).

## Patentansprüche

1. Verfahren zur Zustellung einer Nachricht unter Verendung wenigstens eines Telekommunikationsnetzes (18, 19, 20, 21), wobei die Nachricht Nachrichteninhalt umfasst, wobei ein Benutzer (1) Zugriff auf eine Mehrzahl von Telekommunikationsdiensten (2, 3, 4, 5, 60), wie beispielsweise digitale Kabelfernsehdienste, Telematikdienste, Dienste des einfachen herkömmlichen Fernsprechsystems (POTS) oder Internetprotokoll-basierte (IP) Dienste, hat, wobei die Telekommunikationsdienste (2, 3, 4, 5, 60) über das wenigstens eine Netz (18, 19, 20, 21) an den Benutzer (1) geliefert werden und der Benutzer (1) unter Verwendung eines oder mehrerer Benutzerzugriffsgeräte (7, 8, 9, 10, 11, 12, 59), wie beispielsweise eines UMTS-Telefons oder einer TV-Set-Top-Box, darauf zugreift, umfassend einen Schritt des Auswählens eines Zielzugriffsgeräts (26) aus den Benutzerzugriffsgeräten (7, 8, 9, 10, 11, 12, 59) auf der Basis von Ergebnissen einer Benutzungsanalyse eines beliebigen der Telekommunikationsdienste (2, 3, 4, 5, 60) und der Benutzerzugriffsgeräte (7, 8, 9, 10, 11, 12, 59), **dadurch gekennzeichnet, dass** das Auswählen eines Zielzugriffsgeräts (26) ferner auf einer Analyse von Betriebsfähigkeiten der Benutzerzugriffsgeräte (7, 8, 9, 10, 11, 12, 59) in Abhängigkeit vom Nachrichteninhalt basiert, wobei die Nachricht am ausgewählten Zielzugriffsgerät (26) durch Konvertieren (55) wenigstens eines Teils des Nachrichteninhalts in ein Format zugestellt wird, welches vom ausgewählten Zielzugriffsgerät (26) abhängt.

2. Verfahren nach Anspruch 1, wobei der Betrieb wenigstens eines der Telekommunikationsdienste (2, 3, 4, 5, 60) wenigstens ein dienstebezogenes Ereignis (42) hervorruft, und wobei das wenigstens eine dienstebezogene Ereignis (42) als eine Eingabe in die Benutzungsanalyse eines beliebigen der Telekommunikationsdienste (2, 3, 4, 5, 60) und der Benutzerzugriffsgeräte (7, 8, 9, 10, 11, 12, 59) verwendet wird.

3. Verfahren nach einem der vorhergehenden Ansprüche, wobei eine persönliche Kennung durch den Benutzer (1), wie beispielsweise eine persönliche Kennung zur Verwendung von Bankdiensten oder öffentlichen Verkehrsmitteln, als eine Eingabe in die Benutzungsanalyse eines beliebigen der Telekommunikationsdienste (2, 3, 4, 5, 60) und der Benutzerzugriffsgeräte (7, 8, 9, 10, 11, 12, 59) verwendet wird.

4. Verfahren nach einem der vorhergehenden Ansprüche, ferner umfassend einen Schritt des Führens eines Protokolls von Ergebnissen der Benutzungsanalyse eines beliebigen der Telekommunikationsdienste (2, 3, 4, 5, 60) und der Benutzerzugriffsgeräte (7, 8, 9, 10, 11, 12, 59), und wobei die Zustellung der Nachricht auf dem Protokoll basiert.

5. Verfahren nach einem der vorhergehenden Ansprüche, wobei der Schritt des Auswählens eines Zielzugriffsgeräts (26) ferner von einem Betriebsmodus eines beliebigen der Benutzerzugriffsgeräte (7, 8, 9, 10, 11, 12, 59) abhängt.

6. Verfahren nach einem der vorhergehenden Ansprüche, wobei das Zustellen der Nachricht ferner von Vorlieben des Benutzers (1) zum Empfangen eines beliebigen der Mehrzahl von Diensten abhängt.

7. Verfahren nach einem der vorhergehenden Ansprüche, wobei das Zustellen der Nachricht einen Schritt des Auslösens einer weiteren Nachricht zum Zielzugriffsgerät (26) umfasst.

8. Anordnung zum Zustellen einer Nachricht, welche Nachrichteninhalt umfasst, über wenigstens ein Telekommunikationsnetz (18, 19, 20, 21), umfassend Mittel zum Gewähren von Zugriff auf eine Mehrzahl von Diensten über das wenigstens eine Netz (18, 19, 20, 21) und über eines oder mehrere Zugriffsgeräte, ferner umfassend Mittel zum Auswählen eines Zielzugriffsgeräts (26) aus den Benutzerzugriffsgeräten (7, 8, 9, 10, 11, 12, 59) auf der Basis von Ergebnissen einer Benutzungsanalyse eines beliebigen der Telekommunikationsdienste (2, 3, 4, 5, 60) und der Benutzerzugriffsgeräte (7, 8, 9, 10, 11, 12, 59), **dadurch gekennzeichnet, dass** die Mittel zum Auswählen eines Zielzugriffsgeräts (26) ferner zum Auswählen des Zielzugriffsgeräts (26) auf der Basis einer Analyse von Betriebsfähigkeiten der Benutzerzugriffsgeräte (7, 8, 9, 10, 11, 12, 59) in Abhängigkeit von der Nachricht ausgelegt sind, und die Anordnung ferner Mittel zum Zustellen der Nachricht am ausgewählten Zielzugriffsgerät (26) durch Konvertieren (55) wenigstens eines Teils der Nachricht in ein Format umfasst, welches vom ausgewählten Zielzugriffsgerät (26) abhängt.

9. Anordnung nach Anspruch 8, ferner umfassend Mittel zum Empfangen von dienstebezogenen Ereignissen (42), Mittel zum Interpretieren dieser dienstebezogenen Ereignisse (42) und Mittel zum Verwenden der Ereignisse (42) als eine Eingabe in die Benutzungsanalyse eines beliebigen der Telekommunikationsdienste (2, 3, 4, 5, 60) und der Benutzerzugriffsgeräte (7, 8, 9, 10, 11, 12, 59).

10. Anordnung nach einem der Ansprühe 8 und 9, ferner umfassend eine Datenbank von historischen Daten in Bezug auf Ergebnisse der Benutzungsanalyse eines beliebigen der Telekommunikationsdienste (2, 3, 4, 5, 60) und der Benutzerzugriffsgeräte (7, 8, 9, 10, 11, 12, 59) und Mittel zum Speichern von Informationen in Bezug auf die Ergebnisse in der Datenbank.

11. Anordnung nach einem der Ansprüche 8 bis 10, wobei das Mittel zum Auswählen des Zielzugriffsgeräts (26) ferner zum Auswählen des Zielzugriffsgeräts (26) auf der Basis eines Betriebsmodus eines der Benutzerzugriffsgeräte (7, 8, 9, 10, 11, 12, 59) ausgelegt ist.

12. Anordnung nach einem der Ansprüche 8 bis 11, wobei das Mittel zum Auswählen des Zielzugriffsgeräts (26) ferner zum Auswählen des Zielzugriffsgeräts (26) auf der Basis von Benutzervorlieben ausgelegt ist.

13. Anordnung nach einem der Ansprüche 8 bis 12, wobei das Mittel zum Zustellen der Nachricht zum Auslösen einer Nachricht zum ausgewählten Zielzugriffsgerät (26) ausgelegt ist.

14. Anordnung nach einem der Ansprüche 8 bis 13, ferner umfassend Mittel zum Bereitstellen einer Angabe der Aufenthaltsorts eines Benutzers (1) auf der Basis des Ergebnisses der Benutzungsanalyse eines beliebigen der Telekommunikationsdienste (2, 3, 4, 5, 60) und der Benutzerzugriffsgeräte (7, 8, 9, 10, 11, 12, 59).

## Revendications

1. Procédé de remise d'un message en utilisant au moins un réseau de télécommunications (18, 19, 20, 21), ledit message comprenant un contenu de message, dans lequel un utilisateur (1) a accès à une pluralité de services de télécommunications (2, 3, 4, 5, 60), tel que des services de télévision câblée numérique, des services télématiques, des services téléphoniques classiques (POTS) ou des services basés sur le protocole Internet (IP), lesquels services de télécommunications (2, 3, 4, 5, 60) sont fournis à l'utilisateur via ledit au moins un réseau (18, 19, 20, 21) et sont accédés par l'utilisateur (1) en utilisant un ou des services d'accès d'utilisateur (7, 8, 9, 10, 11, 12, 59), tels que un téléphone UMTS ou un décodeur télévisuel, comprenant une étape de sélection d'un dispositif d'accès cible (26) parmi lesdits dispositifs d'accès d'utilisateur (7, 8, 9, 10, 11, 12, 59), **caractérisé en ce que** ladite sélection d'un dispositif d'accès cible (26) est en outre basée sur une analyse des capacités opérationnelles desdits dispositifs d'accès d'utilisateur (7, 8, 9, 10, 11, 12, 59) en fonction dudit contenu de message, dans lequel ledit message est remis au niveau dudit dispositif d'accès cible sélectionné (26) en convertissant (55) au moins une partie dudit contenu de message en un format qui est fonction dudit dispositif d'accès cible sélectionné (26).

2. Procédé selon la revendication 1, dans lequel le fonctionnement d'au moins un desdits services de télécommunications (2, 3, 4, 5, 60) invoque au moins un évènement relatif à un service (42), et dans lequel ledit au moins un évènement relatif à un service (42) est utilisé comme une entrée dans ladite analyse d'utilisation de n'importe lequel desdits services de télécommunications (2, 3, 4, 5, 60) et desdits dispositifs d'accès d'utilisateur (7, 8, 9, 10, 11, 12, 59).

3. Procédé selon une quelconque des revendications précédentes, dans lequel une identification personnelle par ledit utilisateur (1), comme une identification personnelle pour l'utilisation de services bancaires ou de transports publics, est utilisée comme une entrée dans ladite analyse d'utilisation de n' importe lequel desdits services de télécommunications (2, 3, 4, 5, 60) et desdits dispositifs d'accès d'utilisateur (7, 8, 9, 10, 11, 12, 59).

4. Procédé selon une quelconque des revendications précédentes, comprenant en outre une étape de conservation d'un historique des résultats de ladite analyse d'utilisation de n'importe lequel desdits services de télécommunications (2, 3, 4, 5, 60) et desdits dispositifs d'accès d'utilisateur (7, 8, 9, 10, 11, 12, 59), et dans lequel la remise dudit message est basée sur ledit historique.

5. Procédé selon une quelconque des revendications précédentes, dans lequel ladite étape de sélection d'un dispositif d'accès cible (26) est en outre fonction d'un mode de fonctionnement de n'importe lequel desdits dispositifs d'accès d'utilisateur (7, 8, 9, 10, 11, 12, 59).

6. Procédé selon une quelconque des revendications précédentes, dans lequel la remise dudit message dépend en outre des préférences de l'utilisateur (1) pour recevoir n'importe lequel de ladite pluralité de services.

7. Procédé selon une quelconque des revendications précédentes, dans lequel la remise dudit message comprend une étape de déclenchement d'un autre message vers ledit dispositif d'accès cible (26).

8. Dispositif de remise d'un message comprenant un contenu de message via au moins un réseau de télécommunications (18, 19, 20, 21), comprenant des moyens de fourniture d'accès à une pluralité de services via ledit au moins un réseau (18, 19, 20, 21) et via un ou plusieurs dispositifs d'accès, comprenant en outre des moyens de sélection d'un dispositif d'accès cible (26) parmi lesdits dispositifs d'accès d'utilisateur (7, 8, 9, 10, 11, 12, 59) sur la base des résultats d'une analyse d'utilisation de n'importe lequel desdits services de télécommunication (2, 3, 4, 5, 60) et desdits dispositifs d'accès d'utilisateur (7, 8, 9, 10, 11, 12, 59), **caractérisé en ce que** lesdits moyens de sélection d'un dispositif d'accès cible (26)sont en outre agencés afin de sélectionner ledit dispositif d'accès cible (26) sur la base d'une analyse des capacités opérationnelles desdits dispositifs d'accès d'utilisateur (7, 8, 9, 10, 11, 12, 59) en fonction dudit contenu de message, et ledit agencement comprend en outre des moyens de remise dudit message au niveau dudit dispositif d'accès cible sélectionné (26) en convertissant (55) au moins une partie dudit contenu de message en un format qui est fonction dudit dispositif d'accès cible sélectionné (26) .

9. Dispositif selon la revendication 8, comprenant en outre des moyens de réception d'évènements relatifs à un service (42), des moyens d'interprétation de ces évènements relatifs à des services (42), et des moyens d'utilisation desdits évènements (42) comme une entrée dans ladite analyse d'utilisation de n'importe lequel desdits services de télécommunications (2, 3, 4, 5, 60) et desdits dispositifs d'accès d'utilisateur (7, 8, 9, 10, 11, 12, 59).

10. Dispositif selon une quelconque des revendications 8 et 9, comprenant en outre une base de données de données d'historique se rapportant aux résultats de ladite analyse d'utilisation de n'importe lequel desdits services de télécommunications (2, 3, 4, 5, 60) et desdits dispositifs d'accès d'utilisateur (7, 8, 9, 10, 11, 12, 59), et des moyens de mémorisation des informations se rapportant auxdits résultats dans ladite base de données.

11. Dispositif selon une quelconque des revendications 8 à 10, dans lequel lesdits moyens de sélection dudit dispositif d'accès cible (26) sont en outre agencés afin de sélectionner ledit dispositif d'accès cible (26) sur la base d'un mode de fonctionnement de n'importe lequel desdits dispositifs d'accès d'utilisateur (7, 8, 9, 10, 11, 12, 59).

12. Dispositif selon une quelconque des revendications 8 à 11, dans lequel lesdits moyens de sélection dudit dispositif d'accès cible (26) sont en outre agencés afin de sélectionner ledit dispositif d'accès cible (26) sur la base de préférences d'utilisateur.

13. Dispositif selon une quelconque des revendications 8 à 12, dans lequel lesdits moyens de remise dudit message sont agencés afin de déclencher un message vers ledit dispositif d'accès cible sélectionné (26).

14. Dispositif selon une quelconque des revendications 8 à 13, comprenant en outre des moyens de fourniture d'une indication de la localisation d'un utilisateur (1) sur la base d'un résultat de ladite analyse d'utilisation de n' importe lequel desdits services de télécommunications (2, 3, 4, 5, 60) et desdits dispositifs d'accès d'utilisateur (7, 8, 9, 10, 11, 12, 59).
